# DEMANDE DE BREVET EUROPEEN

(11) **EP 0 693 812 A1**
(43) Date de publication de la demande: **24.01.1996**
(21) Numéro de dépôt: 95410069.9
(22) Date de dépôt: 10.07.1995
(51) Int. Cl.: H02H 3/00

(54) **Déclencheur électronique comportant au moins un organe de réglage**

(30) Priorité: 18.07.1994 FR 9409068
(71) Demandeur: SCHNEIDER ELECTRIC SA, F-92100 Boulogne-Billancourt (FR)
(72) Inventeur: Suptitz, Eric, F-38050 Grenoble Cedex 09 (FR)
(74) Mandataire: Jouvray, Marie-Andrée

(57) **Abrégé**

Le déclencheur comporte une unité de traitement (4) qui donne un ordre de déclenchement (6) en fonction de la valeur du courant fourni par des capteurs de courant (3a, 3b, 3c), et des valeurs de seuil et de temporisation définies par des organes de réglage (5e). Les organes de réglage connectés à l'unité de traitement, comportent des contacts multiples (A, B, C, D). Les contacts fournissent une valeur codée binaire représentative de chaque position de l'organe de réglage. Pour éviter les aléas de fonctionnement entre deux positions, un seul des contacts change d'état entre deux positions successives. La valeur fournie par l'organe de réglage est la valeur correspondant à la position immédiatement inférieure ou à la position immédiatement supérieure. Le code représentatif de chaque position peut suivre, par exemple, l'ordre du codage GRAY.

## Description

L'invention concerne un déclencheur électronique comportant :
- une unité de traitement connectée à des capteurs de courant et fournissant un ordre de déclenchement lorsque le courant fourni par les capteurs dépasse un seuil prédéterminé pendant un temps prédéterminé, et
- au moins un organe de réglage, à plusieurs positions, connecté à l'unité de traitement.

Les déclencheurs électroniques connus comportent des capteurs de courant, une unité de traitement et un relais de déclenchement permettant d'ouvrir les contacts d'un disjoncteur. L'unité de traitement reçoit des signaux fournis par les capteurs de courant et peut produire un ordre de déclenchement pour commander le relais. L'ordre de déclenchement est produit lorsque la valeur des signaux de courant dépasse des seuils prédéterminés pendant des temps prédéterminés. Les seuils, les temporisations ainsi que le choix du type de courbes de déclenchement peuvent être fixes, ou de préférence réglables à l'aide d'organes de réglage connectés à l'unité du traitement.

Il est bien connu d'utiliser des potentiomètres ou des résistances variables pour effectuer des réglages, notamment dans les déclencheurs électroniques analogiques, mais ces composants sont coûteux et peu fiables. Les déclencheurs numériques comportent de préférence des commutateurs à plusieurs positions à contacts simples ou à contacts multiples codés, comme des roues codeuses. Les entrées et les sorties des commutateurs sont gérées par des circuits logiques, par exemple par un microprocesseur. Lesdits circuits déterminent les réglages des seuils, des temporisations, et/ou le choix des courbes de déclenchement en fonction des positions des commutateurs.

Lors du réglage d'un commutateur, un utilisateur, habitué à des réglages progressifs avec un potentiomètre, risque de positionner le commutateur entre deux positions fixes. Dans le cas d'un commutateur à contact simple, le microprocesseur peut détecter une anomalie et positionner les réglages à des valeurs minimales ou à des valeurs par défaut. Par exemple, si deux positions sont détectées, il choisit la plus basse des deux, et si aucune position ne peut être détectée il positionne les réglages au minimum.
Avec un commutateur à contacts multiples, du type roue codeuse, les fermetures et ouvertures des contacts du commutateur suivent, de manière connue, un codage binaire, par exemple sur 8, 10 ou 16 positions. Le codage binaire est en valeur croissante et ne permet pas aux circuits de l'unité de traitement de détecter des valeurs fausses ou aléatoires produites par des positions intermédiaires.

L'invention a pour but un déclencheur électronique comportant au moins un organe de réglage à commutateur à contacts multiples fiable.

Ce but est atteint par le fait que l'organe de réglage comporte des contacts multiples, connectés à l'unité de traitement, fournissant un code binaire, un seul contact changeant d'état entre deux positions successives de l'organe de réglage.

Dans un mode de réalisation préférentiel, l'organe de réglage comporte au moins trois contacts.

Selon un mode de réalisation particulier, l'organe de réglage fournit un code binaire représentatif de chaque position dans l'ordre du codage Gray.

L'organe de réglage peut être un commutateur à commande axiale ou une roue codeuse à commande latérale.

Dans un développement du mode préférentiel de réalisation, les contacts de l'organe de réglage sont gravés sur un circuit imprimé de l'unité de traitement.

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :

La figure 1 représente un schéma-bloc d'un déclencheur de type connu comportant des organes de réglage.

La figure 2 montre une unité de traitement et un organe de réglage connu à commutateur simple pouvant faire partie du déclencheur de la figure 1.

La figure 3 montre une unité de traitement et un organe de réglage à contacts multiples pouvant faire partie du déclencheur de la figure 1.

La figure 4 montre un déclencheur selon un mode de réalisation de l'invention comportant un organe à contacts multiples.

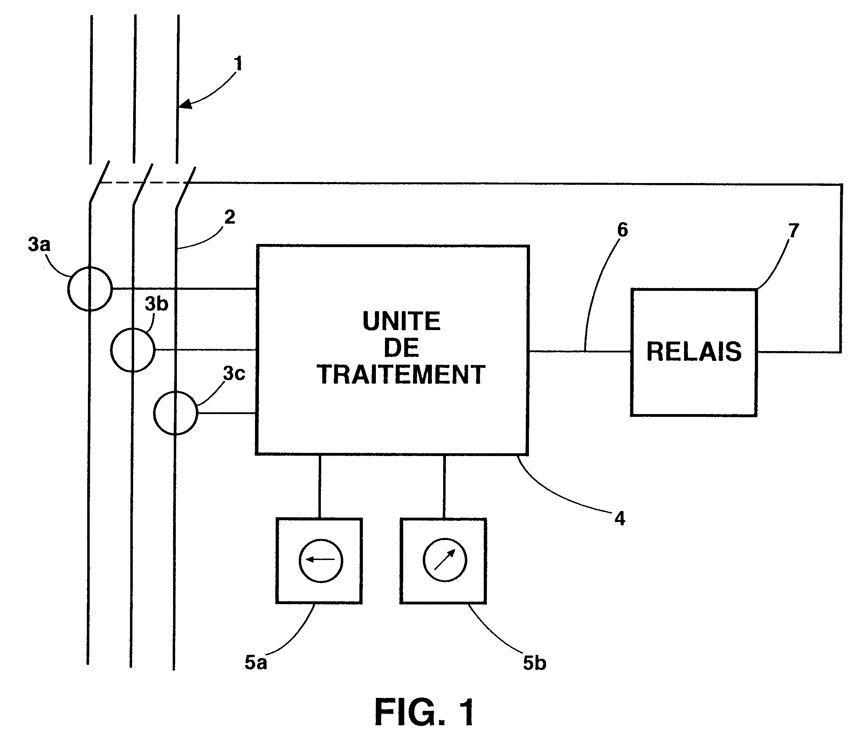

La figure 1 représente le schéma-bloc d'un déclencheur de type connu associé à un disjoncteur. Le disjoncteur protège un réseau 1 composé de conducteurs électriques. Des contacts 2 permettent d'établir ou d'interrompre le courant dans le réseau 1. Des capteurs de courant 3a, 3b, 3c associés aux conducteurs du réseau fournissent des signaux représentatifs des courants circulant dans les conducteurs. Les signaux représentatifs des courants sont appliqués à des entrées d'une unité de traitement 4. Des organes de réglage 5a et 5b sont connectés à l'unité de traitement. Lesdits organes permettent le réglage de seuils, de temporisation ou le choix des courbes de déclenchement de l'unité de traitement. Un ordre de déclenchement 6 produit par l'unité de traitement 4 est appliqué à l'entrée d'un relais 7 de commande qui actionne un mécanisme d'ouverture des contacts 2 du disjoncteur.

L'unité de traitement 4 produit l'ordre de déclenchement 6 en fonction des valeurs des signaux fournis par les capteurs 3a, 3b, 3c représentatifs des courants circulant dans les conducteurs du réseau 1, de seuils prédéterminés, de valeurs de temporisation et de types de courbes de déclenchement. Les seuils, les temporisation, ou les types de courbes peuvent être fixes ou réglables à l'aide d'organes 5a, 5b de réglage.

Le déclencheur peut comporter, de manière connue, des seuils, des temporisations et des types de courbes multiples. Par exemple, un seuil, une temporisation et un type de courbe sont utilisés pour une fonction thermique, appelée aussi long retard. Dans la fonction long retard, le type de courbe est de préférence en It = C, où I est la valeur élevée au carré d'une grandeur représentative du courant circulant dans les conducteurs du réseau, t représente le délai entre l'apparition d'un défaut ou d'une surcharge et le moment de déclenchement, et C représente une constante.

Dans un déclencheur complexe, à réglages multiples, les organes de réglage sont aussi utilisés pour d'autres fonctions, par exemple, pour les réglages de la protection en défaut terre ou pour des fonctions de délestage-relestage.

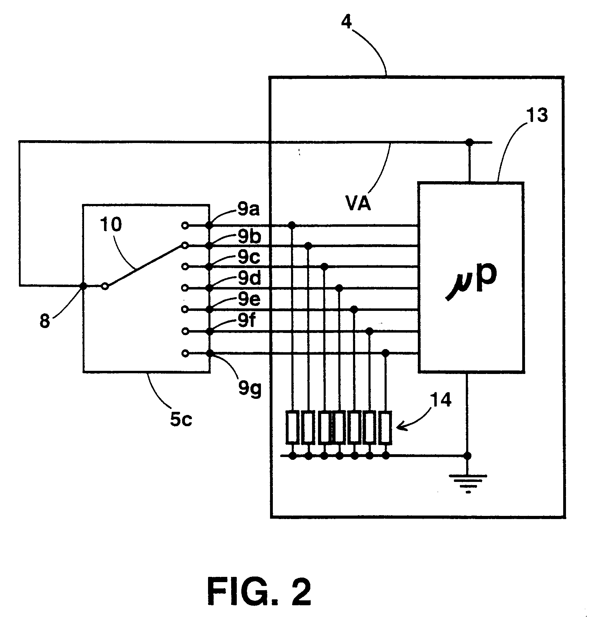

La figure 2 montre une unité de traitement 4 et un organe de réglage 5c constitué par un commutateur à contact simple. Le commutateur comporte une entrée commune 8 et des sorties 9a-9g connectées à l'unité de traitement 4. L'entrée 8 est connectée à une tension d'alimentation VA de l'unité de traitement et les sorties 9a à 9g sont connectées à des entrées d'un circuit logique 13. Des résistances 14 sont connectées entre chaque sorties 9a à 9g et la masse électrique de l'unité de traitement pour polariser les sorties du commutateur et les entrées du circuit 13. La connexion de l'entrée 8 à la masse et la polarisation des sorties 9a-9g avec des résistances 14 connectées à une tension VA produirait les mêmes résultats. En fonctionnement normal, un contact est établi par l'intermédiaire d'un curseur 10, entre l'entrée 8 et une seule des sorties. Cependant, si le curseur se trouve entre deux positions, il peut arriver qu'aucune des sorties ne soit reliée à l'entrée lorsque les contacts sont sans recouvrement. Si les contacts sont à recouvrement deux sorties successives peuvent être reliées en même temps.

L'unité de traitement lit les sorties 9a-9g du commutateur 5c et attribue une valeur au seuil, à la temporisation ou au type de courbe correspondant. En cas d'anomalie, due par exemple à une mauvaise position, l'unité de traitement détecte l'anomalie et attribue une valeur par défaut, ou une valeur minimale, pour privilégier de préférence la sécurité.

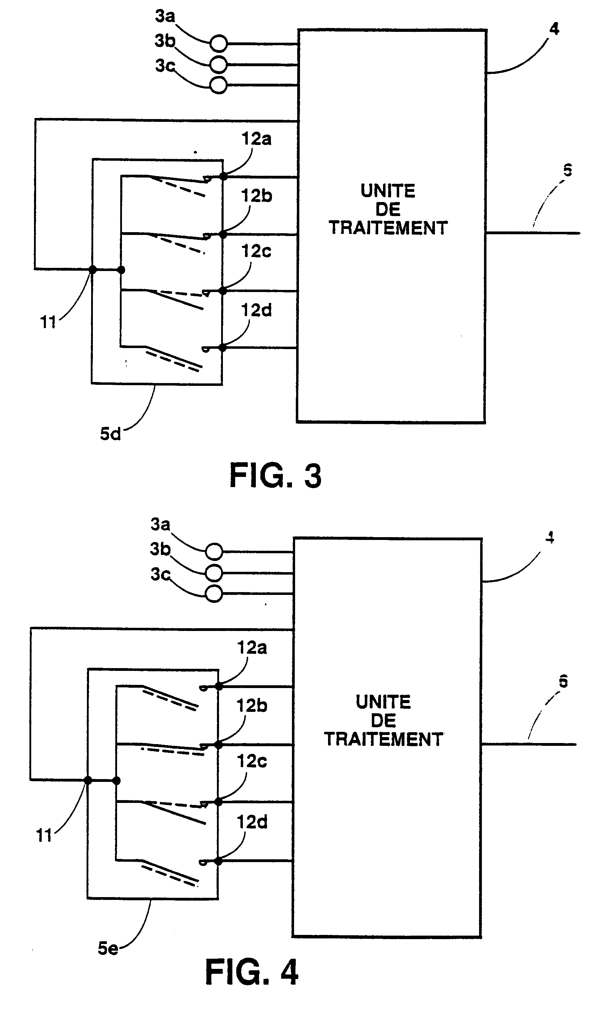

Sur le schéma de la figure 3, le commutateur simple est remplacé par un commutateur 5d à contacts multiples. Ledit commutateur 5d comporte une entrée commune 11 et quatre sorties 12a, 12b, 12c et 12d connectées à l'unité de traitement. La connexion de l'entrée 11 et la polarisation des sorties 12a-12d sont du même type que celles de l'entrée 8 et les sorties 9a-9g du commutateur 5c. Des contacts A, B, C et D reliant l'entrée 11 respectivement aux sorties 12a, 12b, 12c et 12d définissent un code. Généralement l'état ouvert d'un contact est défini par la valeur 1 et l'état fermé par la valeur 0. Dans la position minimum du commutateur, les contacts A, B, C, D sont ouverts. Ils fournissent à l'unité de traitement une valeur binaire codée 0000 représentative de l'état des contacts respectivement A, B, C, D. En prenant, par exemple, le contact A représentatif du bit le plus faible et le contact D pour le bit de poids le plus fort, un tableau 1 donne les valeurs binaires codées d'un commutateur 5d à dix positions.

**Tableau 1**

| **Position** | **Code** |
|---|---|
| 0 | 0000 |
| 1 | 0001 |
| 2 | 0010 |
| 3 | 0011 |
| 4 | 0100 |
| 5 | 0101 |
| 6 | 0110 |
| 7 | 0111 |
| 8 | 1000 |
| 9 | 1001 |

Les positions croissantes 0 à 9 donnent des valeurs binaires codées 0000 à 1001. Entre certaines positions consécutives plusieurs contacts peuvent changer d'état. Par exemple, la position 3 correspond à un code 0011 représentatif des contacts A et B fermés et C et D ouverts, alors que la position 4 correspond à un code 0100 représentatif des contacts A, B et D ouverts et du contact C fermé. Entre lesdites positions 3 et 4, les trois contacts A, B et C changent d'état. Sur la figure 3 les états des contacts de la position 3 sont représentés en traits pleins continus et les états des contacts de la position 4 sont représentés en traits discontinus.

Si tous les contacts ne changent pas d'état exactement en même temps, une position intermédiaire, entre les positions 3 et 4, pourrait donner des valeurs de code erronées, par exemple 0111, 0000, 0001, 0010, 0101, 0110 représentatifs respectivement des positions 7, 0, 1, 2, 5, 6 au lieu des valeurs 0011 ou 0100 des positions 3 ou 4.

Des valeurs aléatoires entre deux positions ne peuvent pas être détectées par l'unité de traitement et les réglages du seuil, de temporisation ou de type de courbe risquent d'être faux et ne pas correspondre à la position du commutateur.

Dans un mode de réalisation de l'invention le commutateur 5d à contacts multiples à codage croissant est remplacé par un commutateur 5e à contacts multiples ayant un seul contact qui change d'état entre deux positions (figure 4). Les connexions du commutateur 5e à l'unité de traitement sont identiques à celles du commutateur 5d. Le codage n'est pas croissant et l'unité de traitement attribue les valeurs de seuil, de temporisation, de type de courbe de manière différente à celle du codage croissant.

Un exemple de codage des contacts A, B, C, D du commutateur 5e est représenté sur un tableau 2.

**Tableau 2**

| **Position** | **Code** |
|---|---|
| 0 | 0000 |
| 1 | 0001 |
| 2 | 0011 |
| 3 | 0010 |
| 4 | 0110 |
| 5 | 0111 |
| 6 | 0101 |
| 7 | 0100 |
| 8 | 1100 |
| 9 | 1101 |

Avec le commutateur 5e, entre les positions 1 (code 0001) et 2 code (0011), seul le contact B change d'état alors qu'avec le commutateur 5d les contacts A et B changeaient d'état (tableau 1). Entre les positions 3 (code 0010) et 4 (code 0110), il ne peut plus y avoir de valeurs erronées, seul le contact C change d'état, les contacts A et D restent ouverts (valeur 0) et le contact B reste fermé (valeur 1). Dans une position intermédiaire, le commutateur 5e donnera le code de la position immédiatement inférieure ou le code de la position immédiatement supérieure. Par exemple, dans une position intermédiaire entre les positions 3 et 4 le commutateur fournit le code de la position 3 ou celui de la position 4. Sur la figure 4 les états des contacts de la position 3 sont représentés en traits pleins continus et les états des contacts de la position 4 sont représentés en traits discontinus.

Le code fourni par le commutateur 5e peut suivre l'ordre du codage GRAY. Le tableau 2 représente l'ordre des positions du commutateur dans lequel le code binaire correspondant suit l'ordre du codage GRAY. Le contact A correspond au bit de poids le plus faible et le contact D au bit du poids le plus fort.

Les organes de réglage à contacts multiples associés à un déclencheur selon l'invention peuvent avoir des formes diverses. Par exemple, ils peuvent être munis d'une commande axiale ou d'une commande latérale comme pour des roues codeuses. Ils peuvent se présenter sous la forme de composants discrets à souder sur une carte du déclencheur ou être intégrés et gravés sur un circuit imprimé où des pistes conductrices font partie des contacts.

Sur le schéma de la figure 4, l'entrée 11 du commutateur 5e est connectée à l'unité de traitement, mais elle pourrait aussi bien être reliée à une tension d'alimentation ou à la masse électrique du déclencheur. Dans le cas où un déclencheur comporte plusieurs organes de réglage, les signaux de sorties 12a, 12b, 12c et 12d des divers organes peuvent être multiplexés avant d'être envoyés à l'unité de traitement.

## Revendications

1. Déclencheur électronique comportant :
- une unité de traitement (4) connectée à des capteurs (3a, 3b, 3c) de courant et fournissant un ordre (6) de déclenchement lorsque le courant fourni par les capteurs dépasse un seuil prédéterminé pendant un temps prédéterminé, et
- au moins un organe de réglage (5a, 5b, 5c, 5d, 5e), à plusieurs positions, connecté à l'unité de traitement,
déclencheur caractérisé en ce que l'organe de réglage (5e) comporte des contacts (A, B, C, D) multiples, connectés à l'unité de traitement, fournissant un code binaire, un seul contact changeant d'état entre deux positions successives de l'organe de réglage.

2. Déclencheur selon la revendication 1 caractérisé en ce que l'organe de réglage comporte au moins trois contacts.

3. Déclencheur selon l'une des revendications 1 et 2 caractérisé en ce que l'organe de réglage fournit un code binaire représentatif de chaque position dans l'ordre du codage Gray.

4. Déclencheur selon l'une quelconque des revendications 1 à 3 caractérisé en ce que l'organe de réglage est un commutateur à commande axiale.

5. Déclencheur selon l'une quelconque des revendications 1 à 3 caractérisé en ce que l'organes de réglage est une roue codeuse à commande latérale.

6. Déclencheur selon l'une quelconque des revendications 1 à 3 caractérisé en ce que les contacts de l'organe de réglage sont gravés sur un circuit imprimé de l'unité de traitement.
